# EUROPEAN PATENT SPECIFICATION

(11) **EP 4 501 778 B1**
(45) Date of publication and mention of the grant of the patent: **18.11.2026**
(21) Application number: 23188740.7
(22) Date of filing: 31.07.2023
(51) Int. Cl.: B64C 1/18, B64D 13/00, B64D 13/06

(54) **AIRCRAFT CABIN FLOOR ARRANGEMENT AND AIR DISTRIBUTION**
FLUGZEUGKABINENBODENANORDNUNG UND LUFTVERTEILUNG
AGENCEMENT DE PLANCHER DE CABINE D'AÉRONEF ET DISTRIBUTION D'AIR

(43) Date of publication of application: 05.02.2025
(73) Proprietor: Airbus Operations GmbH, 21129 Hamburg (DE)
(72) Inventor: LOHMAR, Jens, 21129 Hamburg (DE); BENTHIEN, Hermann, 21129 Hamburg (DE); PEIMANN, Janes, 21129 Hamburg (DE)
(74) Representative: LKGLOBAL Partnerschaftsgesellschaft mbB

(56) References cited:
- DE-A1- 102020 122 848
- US-A1- 2006 202 084
- US-B2- 9 745 067

## Description

### FIELD OF THE INVENTION

The present invention relates to air supply in an aircraft. In particular, the present invention relates to an aircraft cabin floor arrangement with air distribution, to a floor system for an aircraft cabin, to an aircraft and to a method for supplying air to an aircraft cabin.

### BACKGROUND OF THE INVENTION

In aircraft cabin areas, air supply can be provided in order to provide treated air to passenger areas, such as cooled or heated air, or humidified air. Air ducts from a central air treatment arrangement can be provided along an aircraft for supply purposes. An aera of air supply ducts is the ceiling area above the cabin space. Another area within the fuselage is below the cabin floor. However, these spaces are also used for electric and other installation purposes.

DE 10 2020 122848 A1, according to its abstract, provides an air-guiding panel element comprising a base panel, a cover panel which is spaced apart from the inner panel surface of the base panel orthogonally thereto, and a peripheral edge having a circumferential wall which connects the base panel and the cover panel to one another and defines an air-guiding interior space between the base panel and the cover panel. The cover panel is provided with a plurality of air passage holes distributed over its surface, and at least one further air passage opening is provided in the base panel or in the lateral peripheral edge, preferably in the peripheral wall, which is in fluid communication with the air-guiding interior space.

US 2006/0202084 A1, according to its abstract, provides a floor for an aircraft cabin, made of a removable floor panel having an opening and fasteners for removably mounting to flanges of transverse floor beams and longitudinal floor joists, with a channel formed by a pair of support brackets having: an upper wall mounted to an underside of the floor panel adjacent the opening; side walls; and a bottom wall, the floor having cover mounting tabs extending from the upper walls into the opening; and an access cover removably mounted on the tabs.

US 9745067 B2, according to its abstract, provides an integrated avionics bay in a floor area can be provided with adequate ventilation. The structure of an aircraft cockpit floor is able to integrate at least one bay, with a walking floor in the cockpit, a structural volume and a bay integrated in a space of the liberated structural volume. The bay as integrated in a horizontal position in this space includes a peripheral frame with at least one protective cover with a direct access to the bay at the floor level and a lower wall with a rear face access. Side openings formed in the frame can couple with vertical walls to allow fresh air blowing from the rear wall of the bay via a flow from rearwards to upwards to reach the top cover and an air extraction by an upper surface extractor.

### SUMMARY OF THE INVENTION

There may thus be a need to provide an efficient and space-saving way of supplying air within a cabin area of an aircraft.

The object of the present invention is solved by the subject-matter of the independent claims 1 and 14; preferred embodiments are incorporated in the dependent claims 2-13. It should be noted that the following described aspects of the invention apply also for the aircraft cabin floor arrangement with air distribution, for the floor system for an aircraft cabin, for the aircraft and for the method for supplying air to an aircraft cabin.

According to the present invention, an aircraft cabin floor arrangement with air distribution is provided. The floor arrangement comprises a plurality of floor panels and at least one air supply. The at least one air supply is configured for being arranged in a longitudinal direction of an aircraft. The plurality of floor panels are configured for being arranged in a spanning direction transverse to the longitudinal direction of the aircraft. The plurality of floor panels each comprise a plurality of elongate cavities aligned with the spanning direction of the floor panels. At least one air supply is fluidly connected to at least a part of the elongate cavities of the floor panels for supplying air from the at least one air supply to the elongate cavities. The fluidly connected elongate cavities are providing supply air to passenger seat areas in an aircraft cabin. The floor panels comprise a top layer and a bottom layer spaced apart by a center layer and the center layer comprises a corrugated or folded sheet-like structure alternately fixed to the top layer and the bottom layer forming the plurality of elongate cavities.

As an effect, an efficient and highly integrated way of air distribution is provided. The integration within the floor panels allows rather small individual air ducts, but due to the possibility to distribute a plurality of these small channels across the complete size of the floor panel in a transverse direction of the aircraft, a sufficiently large enough diameter for air flow is provided in total.

As an advantage, additional space below the floor panel for system installation is achieved; or it is even possible to reduce the diameter of the aircraft which directly improves the aircraft performance, since the installation of the air supply is arranged in a space saving manner by integrating the air distribution within the actual floor panels.

According to an example, the floor panels are provided as sandwich panels.

According to an example, a first part of the elongate cavities is provided as air supply cavities for the air supply, and a second part of the elongate cavities is provided as insulation cavities used for providing thermal insulation to thermally insulate the air supply cavities. The air supply cavities and the insulation cavities are arranged in an alternating manner. The air supply cavities are arranged to be accessible from below.

According to an example, the corrugated or folded sheet-like structure is fixed at least to the bottom layer by mounting points that are provided as connecting interfaces for additional mounting to the floor panel.

According to an example, the at least one air supply is attached to the plurality of floor panels from below. A plurality of air supply passages is provided in the underside of the floor panels for providing a supply connection from the at least one air supply to the plurality of elongate cavities.

According to an example, the at least one air supply is mounted to at least a part of the mounting points provided as connecting interfaces.

According to an example, the at least one air supply is provided as a longitudinal air duct forming an air distribution unit below the floor panels.

According to an example, the at least one air supply is provided by a flexible sheetlike structure attached to the floor panels. As an option, the flexible sheetlike structure is provided as a fabric or foil.

According to an example, the attachments of the flexible sheetlike structure are provided with a failure capability for a determined threshold of pressure difference occasion under rapid decompression.

According to an example, the floor panels are provided with air outlet openings in one edge region. The air outlet openings are fluidly connected to at least a part of the elongate cavities.

According to the present invention, also a floor system for an aircraft cabin is provided. The floor system comprises a support structure. The support structure comprises a first and a second row of vertical support members for resting on the fuselage structure. The first and second rows are spaced apart from each other transverse to the longitudinal direction of the aircraft. The support structure also comprises a support arrangement carried by the vertical support members and forming a plurality of floor supports. The floor supports are provided in the longitudinal direction along both sides forming a main center section between. The floor system also comprises an aircraft cabin floor arrangement according to one of the preceding examples. The plurality of floor panels are carried by the floor supports spanning the main center section.

According to the present invention, also an aircraft is provided. The aircraft comprises a fuselage, a wing arrangement attached to the fuselage, and a propulsion arrangement attached to at least one of the group of fuselage and wing arrangement. A cabin floor is provided in the fuselage for a cabin area and the cabin floor comprises at least one aircraft cabin floor arrangement according to one of the examples above or a floor system for an aircraft cabin according to one of the examples above.

According to the present invention, also a method for supplying air to an aircraft cabin is provided. The method comprises the following steps:
- supplying air with at least one air supply arranged in a longitudinal direction of an aircraft;
- supplying the air to a plurality of elongate cavities provided in a plurality of floor panels, which panels are arranged in a spanning direction transverse to the longitudinal direction of the aircraft; the elongate cavities being aligned with the spanning direction of the floor panels; and
- supplying the air from the elongate cavities to passenger seat areas in the aircraft cabin.

According to an aspect, floor panels are provided as floor beam panels made from lateral oriented folded or corrugated profiles.

According to an aspect, an inner structure of a floor panel is provided that support the supporting capabilities, e.g. in the spanning direction, and that at the same time also enables an air flow in the spanning direction for air distribution purposes. An air supply line is provided transverse connecting the air channels within the panels with an air source.

According to an aspect, a bending-stiff floor panel which is able to carry the loads from the trolleys and rapid decompression is provided as a simply supported continuous beam which allows a continuous air distribution from below. A closing fabric layer from below allows a closed airtight cargo separation and an easy handling of rapid decompression. A hole pattern inside the e.g. thermoplastic bottom layer allows a continuous air introduction between the air supply cargo ceiling and the corrugated floor panels. The holes in the bottom layer can also be used for further mounting via mounting interfaces where needed, for example for the attachment of the fabric air supply ceiling from below. The attachments may fail under rapid decompression.

According to an aspect, the duct function is integrated into the cabin floor, i.e. the cargo ceiling. This eliminates to arrange the air ducts into the so-called triangle of the floor support, which relaxes the space problem in this area and allows a facilitated cable guiding etc. in this space.

According to an aspect, a replacement of floor panels and cross beams with a corrugated or folded floor panel structure is provided which is also working as an air distributor. This means significant part, cost and weight reduction.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of an aircraft cabin floor arrangement with air distribution.
Fig. 2 schematically shows an example of a floor system for an aircraft cabin.
Fig. 3 shows a cross-section of an example of an aircraft
Fig. 4 shows basic steps of an example of a method for supplying air to an aircraft cabin.
Fig. 5 shows another example of a floor system in a vertical cross-section transverse to a longitudinal direction of the aircraft.
Fig. 6 shows another example of an aircraft cabin floor arrangement with air distribution in a vertical cross-section along the longitudinal direction of the aircraft.
Fig. 7 shows a further example of an aircraft cabin floor arrangement with air distribution in a vertical cross-section along the longitudinal direction of the aircraft.
Fig. 8 shows a further example of an aircraft cabin floor arrangement with air distribution in a vertical cross-section transverse to the longitudinal direction of the aircraft.
Fig. 9 shows a further example of a floor system in a vertical cross-section transverse to a longitudinal direction of the aircraft.
Fig. 10 shows a cross section of an aircraft with an example of the floor system.
Fig. 11 shows a cross section of an aircraft with another example of the floor system.
Fig. 12 shows some more detailed cross-sections of the air supply of the cabin floor arrangement of Fig. 11.
Fig. 13 shows another example of an aircraft cabin floor arrangement with insulation cavities.
Fig. 14 shows a further example of an aircraft cabin floor arrangement.
Fig. 15a and 15b show two assembly steps of a workflow of mounting the aircraft cabin floor arrangement.
Fig. 16 shows a connection of the aircraft cabin floor arrangement with an example of a support structure.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

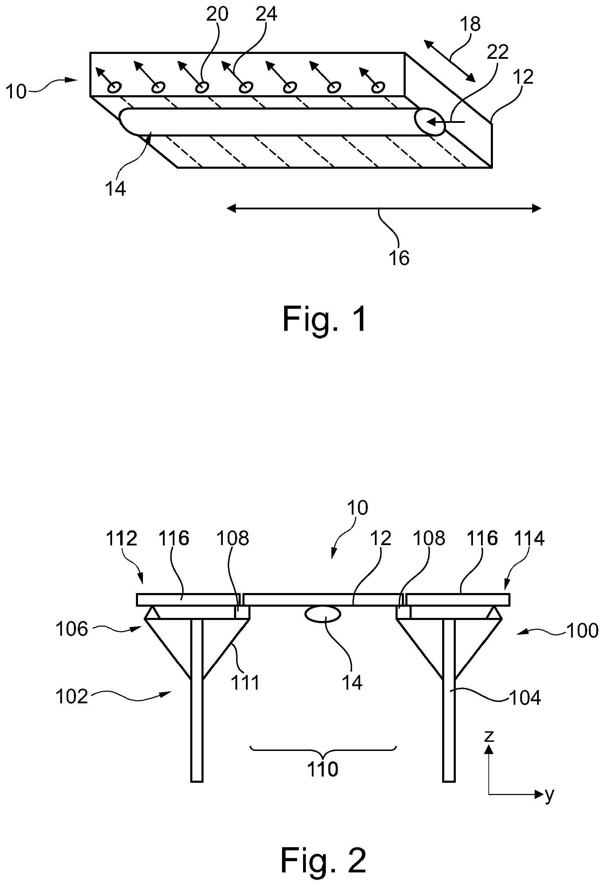

Fig. 1 schematically shows an example of an aircraft cabin floor arrangement 10 with air distribution. The aircraft cabin floor arrangement 10 comprises a plurality of floor panels 12 and at least one air supply 14. The at least one air supply 14 is configured for being arranged in a longitudinal direction 16 of an aircraft. The plurality of floor panels 12 is configured for being arranged in a spanning direction 18 transverse to the longitudinal direction 16 of the aircraft. The floor panels 12 each comprise a plurality of elongate cavities 20 aligned with the spanning direction 18 of the floor panels 12. The at least one air supply 14 is fluidly connected to at least a part of the elongate cavities 20 of the floor panels 12 for supplying air from the at least one air supply 14 to the elongate cavities 20. The fluidly connected elongate cavities 20 are providing supply air to passenger seat areas in an aircraft cabin.

A first arrow 22 indicates the flow of air supplied to the at least one air supply 14. Further, second arrows 24 indicate the flow of air inside the elongate cavities 20.

In a mounted state, the elongate cavities 20 of the floor panels 12 are running parallel to the spanning direction 18, i.e. transverse to the longitudinal direction of the aircraft.

The floor panels 12 are configured to span between two lateral support structures. In an example, the floor panels 12 are configured to span from one edge to an opposing edge.

The floor panels 12 can also be referred to as airing floor panels or air supply floor panels or air ducting floor panels or flooring air duct panels.

The cabin floor arrangement 10, i.e. the floor panels with the air supply, provides a central air distribution. The floor panels 12 can also be referred to as floor beam panels.

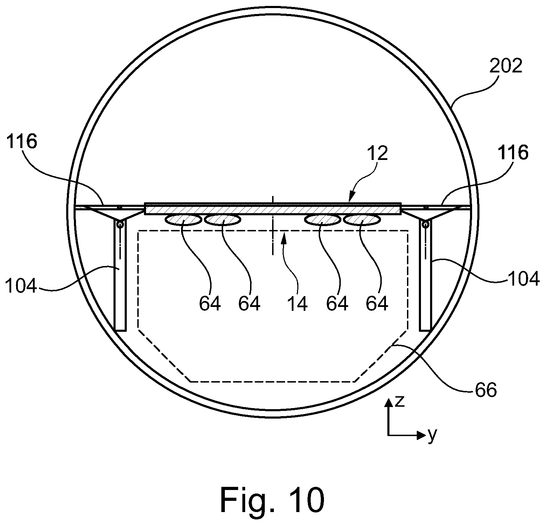

Fig. 2 schematically shows an example of a floor system 100 for an aircraft cabin. The floor system 100 comprises a support structure 102 comprising a first and a second row of vertical support members 104 for resting on the fuselage structure (see also Fig. 10). The first and second rows are spaced apart from each other transverse to the longitudinal direction 16 of the aircraft. The support structure 102 also comprises a support arrangement 106 carried by the vertical support members 104 and forming a plurality of floor supports 108. The floor supports 108 are provided in the longitudinal direction 16 along both sides forming a main center section 110 between. The floor system 100 comprises an example of the aircraft cabin floor arrangement 10 according to one of the preceding examples. The plurality of floor panels are carried by the floor supports spanning the main center section 110.

The first row and the second row of the vertical support members 104 are running along the longitudinal direction 16 of the aircraft. The vertical support members 104 can also be referred to as vertical posts or pillars.

In an example, the main support arrangement 106 comprises two longitudinal horizontal support members carried by the vertical support members 104. The longitudinal horizontal support members can also be referred to as beams or main grid members.

In an example, the longitudinal horizontal support members are running in the longitudinal direction of the aircraft on two lateral sides spaced apart from each other.

In an example, the floor panels 12 are providing structural load transfer in the floor plane for stiffening the fuselage structure.

As an option, the floor panels 12 are part of the main or primary structure of the aircraft, i.e. the structure that is considered essential for the aircraft and that must not be changed or altered during use of the aircraft.

In an example, the floor panels 12 are supported between triangles provided by the support structure.

In an option, the floor supports are provided as rotating floor supports, or rotating interfaces.

In Fig. 2, the support structure 102 comprises cantilevering triangular structures 111 mounted to the vertical support members 104. The triangular structures 111 are provided on an outer lateral side and on an inner side facing towards the main center section 110.

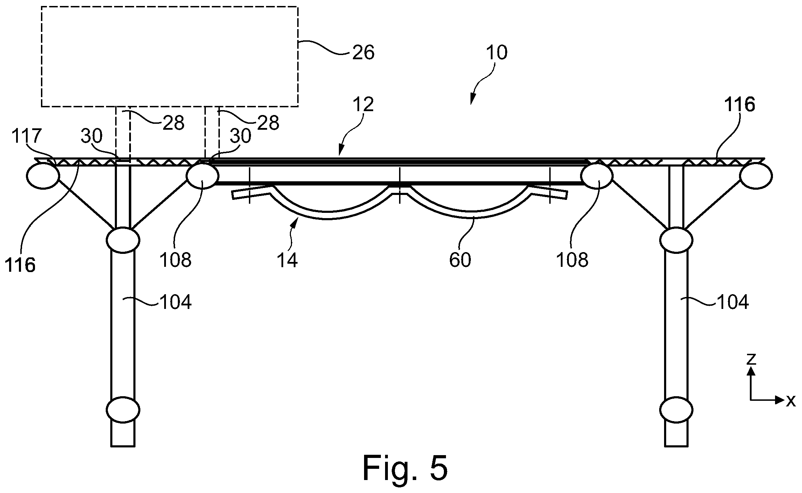

As an option, the plurality floor supports 108 also comprises floor supports forming a first lateral section 112 and a second lateral section 114 on both sides of the main center section 110. As another option, the floor system 100 comprises secondary floor panels 116 at least partly along the first and second lateral sections 112, 114. As can be seen in Fig. Fig. 5, the secondary floor panels 116 each comprise a plurality of elongate passages 117 aligned in the longitudinal direction 16 of the aircraft for receiving electric supply lines for passenger seats.

A coordinate system is shown in Fig. 2 and the following figures, with an X-axis indicating the longitudinal direction 16 of an aircraft, with a Y-axis indicating the horizontal direction transverse to the longitudinal direction 16 of the aircraft and a Z-axis indicating the vertical direction transverse to the longitudinal direction 16 and transvers to the horizontal transverse direction of the aircraft. In Fig. 2, only the Z-axis and the X-axis is shown.

The secondary floor panels 116 are forming outer longitudinal floor portions. In an example, the secondary floor panels 116 are provided similar to, or same as, the air supply floor panels 12 provided in the main center section 110, but with a transverse orientation of the cavities structure. For example, the elongate passages are provided as elongate cavities.

The electric supply lines may comprise data connection and electric power supply for the passenger seats. For example, inflight infotainment equipment installed in the passenger seats is supplied by these electric supply lines. Or a signal from an emergency button arranged at the passenger seat is communicated via the electric supply lines. Or control motors of the seat are supplied and controlled via the supply lines. The electric supply lines can also be referred to as cables.

In an example, the secondary floor panels 116 are provided with electric supply lines. For example, the supply lines are integrated conductors connectable by demand via screw-in connections.

In another example, the secondary floor panels 116 are provided at least partly along the outer longitudinal floor portions.

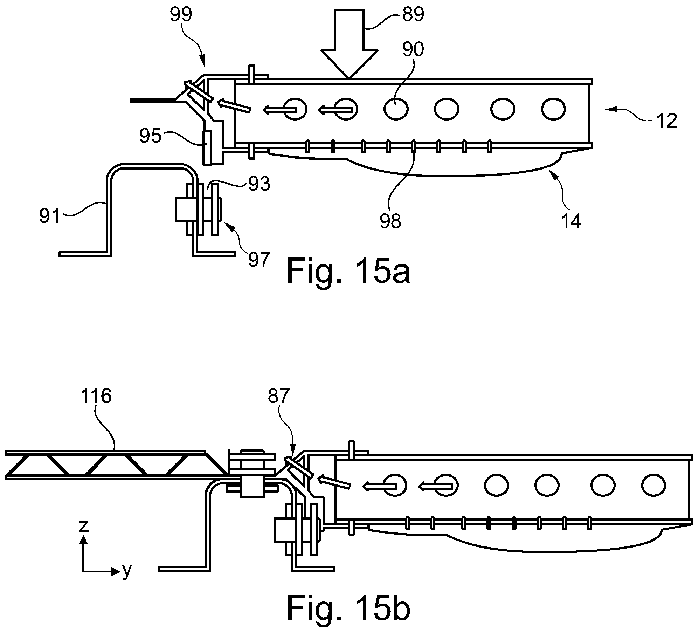

In an option, the floor panels 12 are provided with a drop-down or drop-in mount interface (also see Fig. 15a and Fig. 15b).

In an option, the at least one air supply 14 is provided as a longitudinal air duct forming an air distribution unit below the floor panels 12.

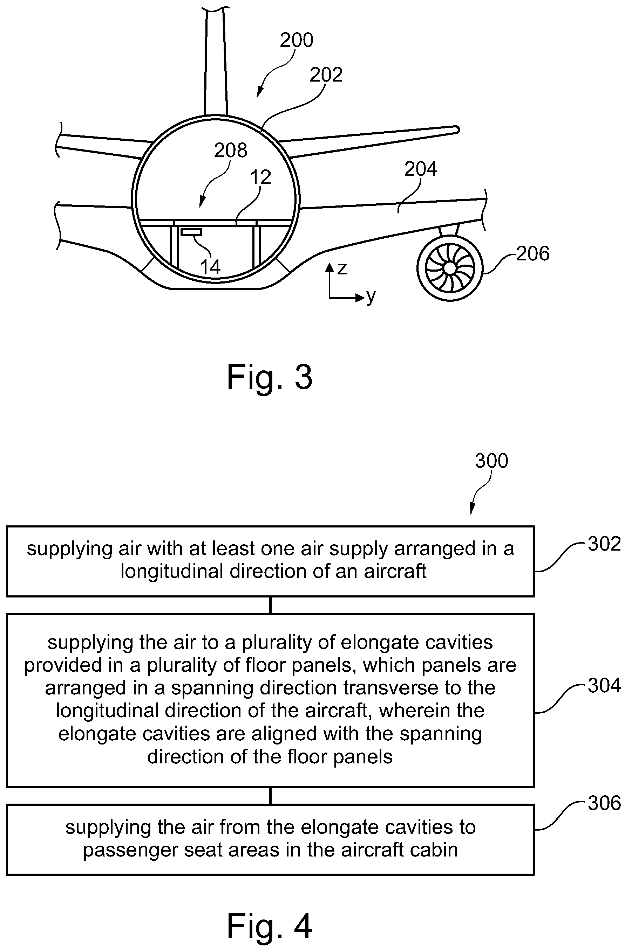

Fig. 3 shows an example of an aircraft 200 in a cross-section. The aircraft 200 comprises a fuselage 202, a wing arrangement 204 attached to the fuselage 202 and a propulsion arrangement 206 attached to at least one of the group of the fuselage 202 and the wing arrangement 206. A cabin floor 208 is provided in the fuselage 202 for a cabin area. The cabin floor 208 comprises at least one example of the aircraft cabin floor arrangement 10 according to one of the exampled above and below, or an example of the floor system 100 for an aircraft cabin according to the examples above and below.

Fig. 4 shows basic steps of an example of a method 300 for supplying air to an aircraft cabin. The method 300 comprises the following steps:
- In a first step 302, air is supplied with at least one air supply arranged in a longitudinal direction of an aircraft.
- In a second step 304, the air is supplied to a plurality of elongate cavities provided in a plurality of floor panels, which panels are arranged in a spanning direction transverse to the longitudinal direction of the aircraft, wherein the elongate cavities are aligned with the spanning direction of the floor panels.
- In a third step 306, the air from the elongate cavities is supplied to passenger seat areas in the aircraft cabin.

Fig. 5 shows another example of the floor system 10 in a vertical cross-section transverse to a longitudinal direction of the aircraft. As an option, a passenger seat arrangement 26 is schematically shown in broken lines. For holding the passenger seat arrangement 26, seat supports 28 may be fixed to seat rails 30 arranged in a floor plane. The seat rails 30 may be supported by the floor supports 108 or other support interfaces of the support structure 102.

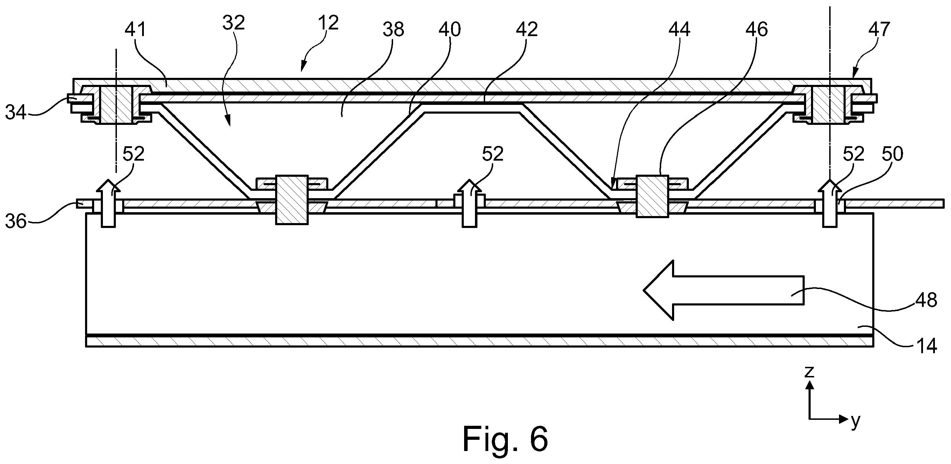

Before referring further to Fig. 5, it is also referred to Fig. 6 for explaining an example of the floor panel 12 that is also provided in Fig. 5.

Fig. 6 shows an example of the aircraft cabin floor arrangement 10 with air distribution in a vertical cross-section along the longitudinal direction 16 of the aircraft. As an option, the floor panels 12 of the plurality of floor panels are provided as sandwich panels 32 comprising a top layer 34 and a bottom layer 36 spaced apart by a center layer 38. The elongate cavities 20 are provided by the center layer 38.

The top layer 34 is the side of the floor panel 12 that faces towards the cabin in a mounted state. The bottom layer 36 is the side of the floor panel 12 that faces away from the cabin in the mounted state, e.g. facing towards a cargo area arranged in the fuselage below the cabin area.

According to the claimed invention, the center layer 38 comprises a shaped sheet-like structure 40 alternately fixed to the top layer 34 and the bottom layer 36 forming the plurality of elongate cavities 20.

In an example, the sheet-like structure 40 is provided as a corrugated sheet. For example. The floor panels 12 are provided as corrugated floor panels.

Another example of the sheet-like structure 40 is a folded sheet, a trapezoidal sheet, a troughed sheet or a profiled sheet.

In the example of Fig. 6, the sheet-like structure 40 is a combination of a folded sheet with trapezoidal segments.

As an option, the corrugated or otherwise reinforced floor panels oriented in Y-direction are replacing the cross beams and floor panels. The corrugated floor panels are used as air ducts. The floor panels are thus provided as multi-function or multi-purpose panels.

In an example, a floor surface layer is arranged on the top layer. The floor surface layer may be provided as a carpet 41.

The sheet-like structure 40 is fixed at least to the bottom layer 36 by mounting points 42 that are provided as connecting interfaces 44 for additional mounting to the floor panel 12. In Fig. 6, the upper mounting points 42 are provided as simple connections, whereas the lower mounting points 42 are provided as more sophisticated interfaces 44 that allow the attachment of additional parts like the air ducts. For example, connection openings 46 are provided to allow mounting equipment or parts from below.

In an option, the at least one air supply 14 is mounted to at least a part of the mounting points 42 provided as connecting interfaces.

As an option, also further connection openings 47 can be provided to allow mounting equipment or parts from above.

The passages are provided as through holes. For example, the passages are connecting holes in the bottom layer.

In an option, some of the connecting interfaces are provided with a central opening.

The mounting points are provided as connecting interfaces for additional mounting to the floor panel from below.

In an example, the corrugated sheet-like structure is fixed to the top layer at least partly by mounting points that are provided as connecting interfaces for additional mounting to the floor panel from the top.

A main arrow 48 indicates a flow of air supply through the air supply 14.

As an option, the at least one air supply 14 is attached to the plurality of floor panels 12 from below, as shown in Fig. 6. A plurality of air supply passages 50 is provided in the underside of the floor panels 12 for providing a supply connection from the at least one air supply 14 to the plurality of elongate cavities 20.

Further arrows 52 indicate a flow of air supply through the air supply passages 50.

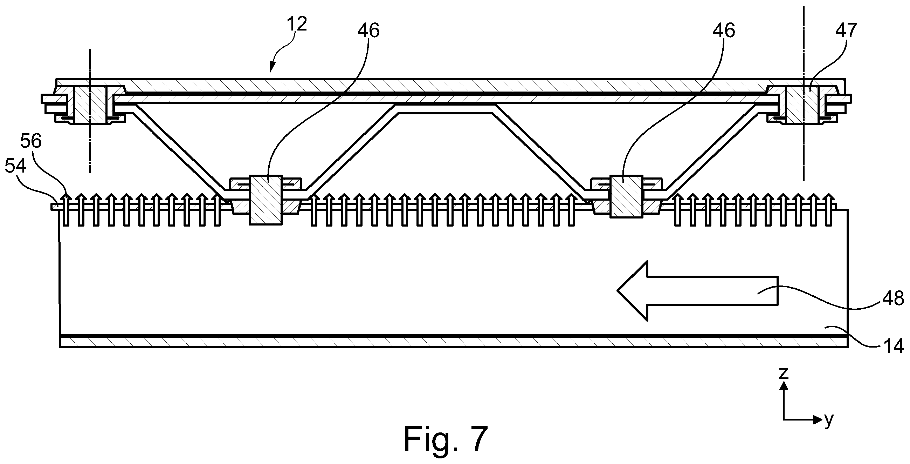

Fig. 7 shows a further example of the aircraft cabin floor arrangement 10 with air distribution in a vertical cross-section along the longitudinal direction of the aircraft. In addition or instead of the air supply passages 50, a perforation like whole structure 54 can be provided in the bottom layer 36 of the panel to allow an airflow in form of multiple smaller flow parts, as indicated with arrows 56 in Fig. 7.

As an option, Fig. 5 shows that the at least one air supply 14 is provided by a flexible sheetlike structure 60 attached to the floor panels.

In an option, the flexible sheetlike structure 60 is provided as a fabric or foil.

The flexible sheetlike structure may also provide thermal insulation function.

The at least one air supply is provided as a longitudinal fabric duct as an air channel.

In an example, the flexible sheetlike structure 60 is provided comprising a web structure.

In an example, the flexible sheetlike structure 60 comprises tensile load absorbing elements.

For example, the flexible sheetlike structure 60 is configured to withstand a pressure difference of 0,1 bar to 1 bar.

In an alternative example, not shown in detail, the at least one air supply is provided by a conduit attached to the floor panels. The conduit may be provided by a rigid structure, e.g. made from plastic or even a thin metal sheet.

As an example, at least some attachments of the flexible sheetlike structure 60 are provided with a failure capability for a determined threshold of pressure difference occasion under rapid decompression.

This provides the option of an air-tight seal of the cabin floor in normal operation mode but allows for decompression in case of emergency situations where the air-tight seal is no longer required, but the rapid decompression.

Alternatively, the material of the air supply itself fails under rapid decompression, e.g. designed with cracking function like a zipper, which opens under certain decompression pressure or a controlled tear of the fabric material at a defined line/point.

The fabric sealing also allows the installation of further systems from below.

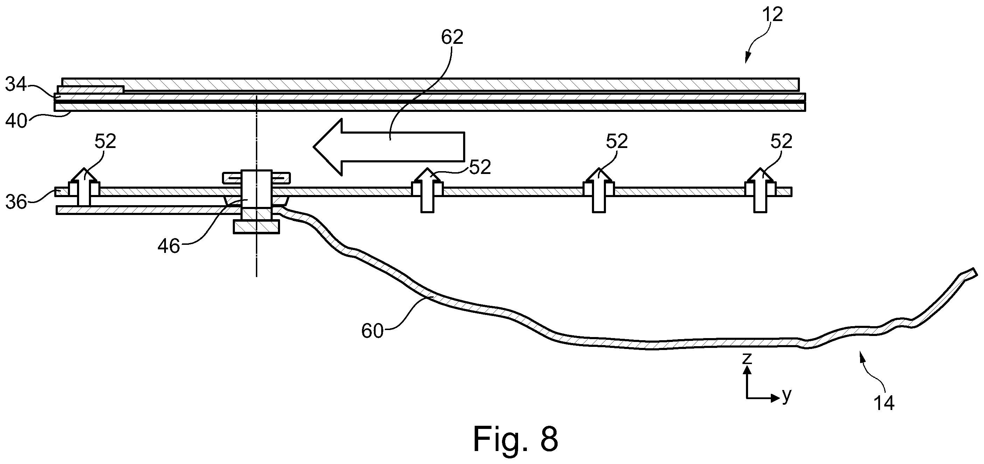

Fig. 8 shows a further example of the aircraft cabin floor arrangement 10 with air distribution in a vertical cross-section transverse to the longitudinal direction 16 of the aircraft.

An arrow 62 indicates an airflow inside the floor panel transverse to the longitudinal direction 16 of the aircraft.

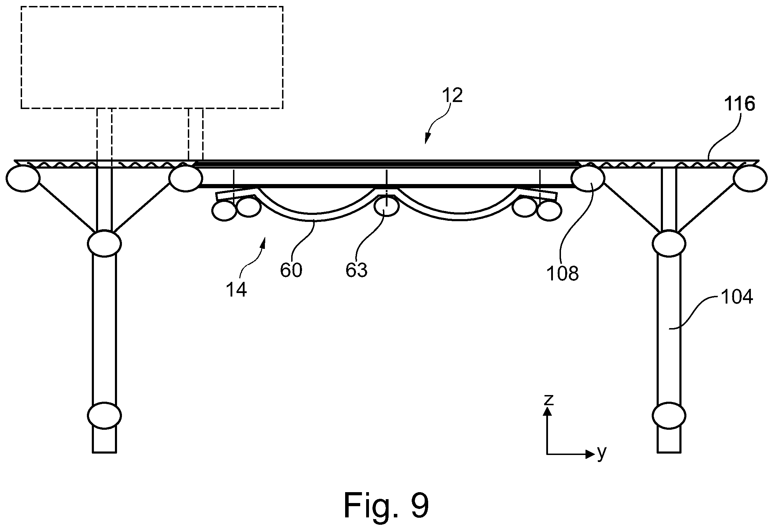

Fig. 9 shows a further example of a floor system in a vertical cross-section transverse to a longitudinal direction 16 of the aircraft. As an option, further infrastructure installation 63 can be provided below the panels 12 if needed.

Fig. 10 shows a cross section of an aircraft with an example of the floor system. For example, a fabric cargo ceiling panel creates the channels, i.e. the at least one air supply 14.

In a mounted state, the at least one air supply by the flexible structure is provided below the panels 12 as soft air ducts 64. In case the area below the cabin area, i.e. below the cabin floor, is used as cargo area, the flexible structure provides the advantage that cargo 66 touching the air ducting structures does not damage the air ducts. The flexible structure simply temporarily deforms and reaches its initial state again.

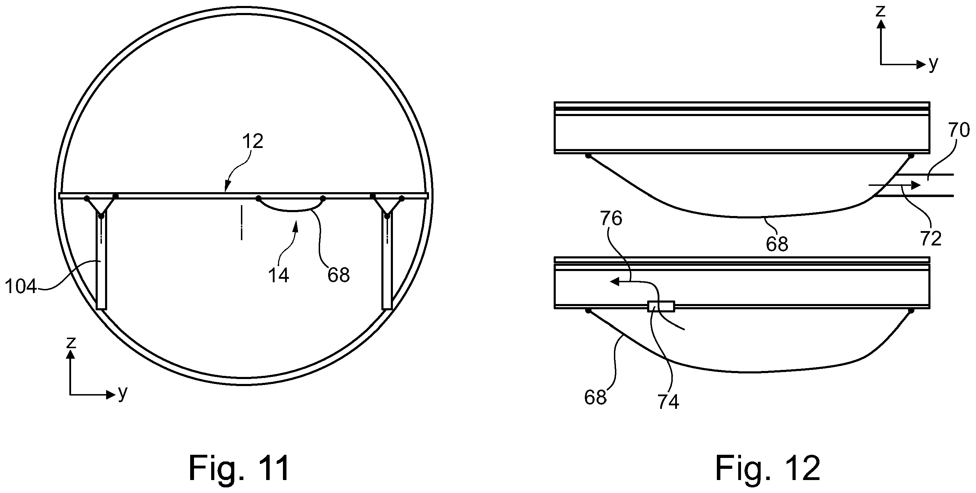

Fig. 11 shows a cross section of an aircraft with another example of the floor system. As an example, one flexible air duct 68 is arranged to supply the panels 12.

Fig. 12 shows some more detailed cross-sections of the air supply of the cabin floor arrangement of Fig. 11. In an upper part of Fig. 12, the flexible air duct 68 is provided with an outlet 70 for further supply function. An opening 74 indicates an air flow 76 into the floor panel 12 in the lower part of Fig. 12.

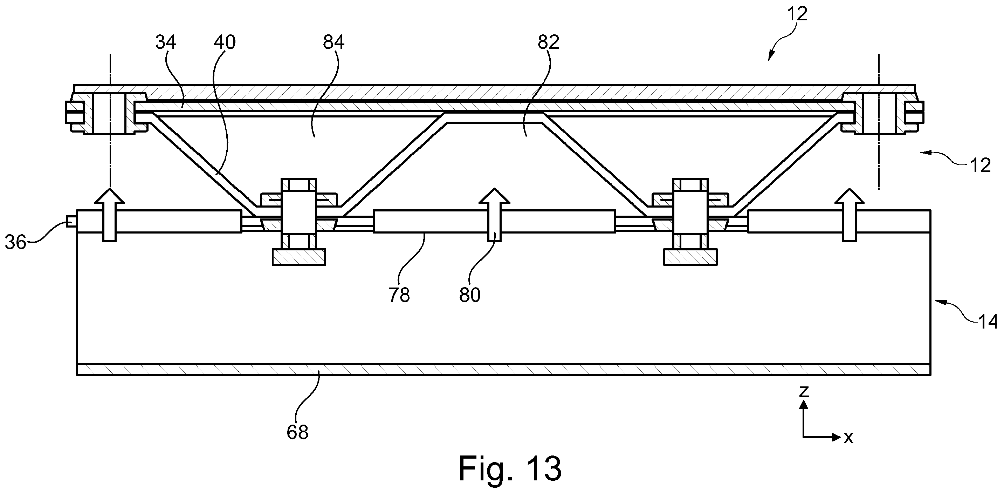

Fig. 13 shows another example of an aircraft cabin floor arrangement with insulation cavities. The flexible air duct 68 is supplying air. Larger openings 78 provide an airstream to the floor panel. In an option, shown in Fig. 13, a first part of the elongate cavities 20 is provided as air supply cavities 82 for the air supply and a second part of the elongate cavities is provided as insulation cavities 84 used for providing thermal insulation to thermally insulate the air supply cavities. As an option, the air supply cavities 82 and the insulation cavities 84 are arranged in an alternating manner. The air supply cavities 82 are arranged to be accessible from below.

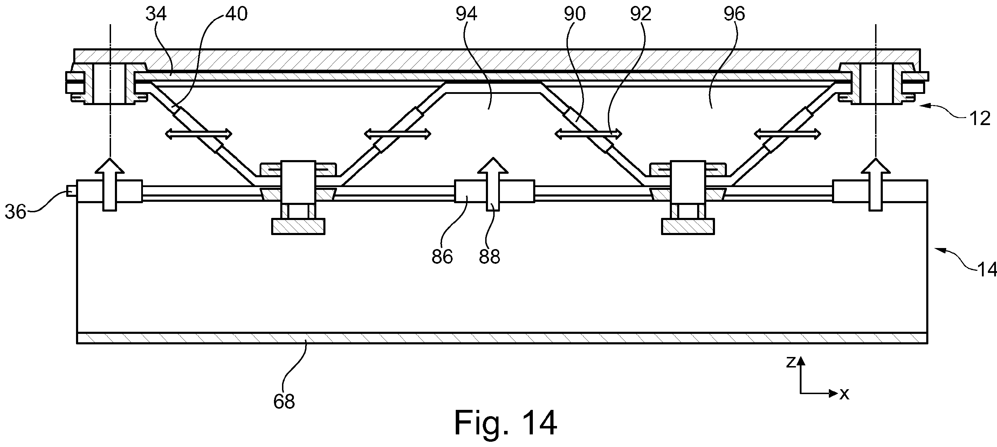

Fig. 14 shows a further example of an aircraft cabin floor arrangement. Further openings 86 are provided in the lower or bottom layer 36 for an airstream, into the floor panel, indicated with arrow 88. As an option, further openings 90 are provided in the sheet-like structure 40 allowing an airstream, indicated with smaller arrows 92, into the further cavities provided by the sheet-like structure 40.

Fig. 15a and 15b show two assembly steps of a workflow of mounting the aircraft cabin floor arrangement 10. The floor panels 12 are shown with a plurality of smaller openings 98 on the bottom side for connecting the air supply 14 to the cavities inside the panel 12.

The floor panel 12 is provided with a mounting bracket 99 on one lateral end. A complementary receiving portion 97 is provided to receive a connecting protrusion 95 in a slit-like reception 93. As an option, the receiving portion 97 is attached to a rail-like support profile 91. A mounting direction arrow 89 indicates the downward oriented mounting movement to install the panel 12.

In an option, also indicated in Fig. 15a and Fig. 15b, the floor panels 12 are provided with air outlet openings 87 in one edge region, the air outlet openings being fluidly connected to at least a part of the elongate cavities.

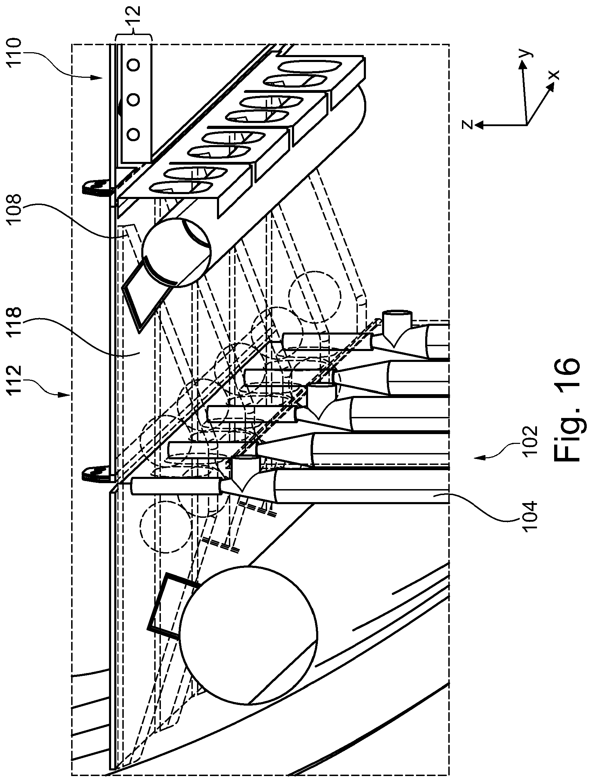

Fig. 16 shows a connection of the aircraft cabin floor arrangement with an example of a support structure 102 indicated with the vertical support members 104 and a plurality of cantilevering arms 118 protruding towards the main center section 110 and providing the floor supports 108. The floor panels 12 are mounted to these floor supports 108.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An aircraft cabin floor arrangement (10) with air distribution, comprising:
- a plurality of floor panels (12); and
- at least one air supply (14);
wherein the at least one air supply is configured for being arranged in a longitudinal direction (16) of an aircraft;
wherein the plurality of floor panels are configured for being arranged in a spanning direction (18) transverse to the longitudinal direction of the aircraft;
wherein the plurality of floor panels each comprise a plurality of elongate cavities (20) aligned with the spanning direction of the floor panels;
wherein the at least one air supply is fluidly connected to at least a part of the elongate cavities of the floor panels for supplying air from the at least one air supply to the elongate cavities;
wherein the fluidly connected elongate cavities are configured to provide the supplied air to passenger seat areas in an aircraft cabin;
wherein the plurality of floor panels comprise a top layer (34) and a bottom layer (36) spaced apart by a center layer (38); and wherein the center layer comprises a corrugated or folded sheet-like structure (40) alternately fixed to the top layer and the bottom layer forming the plurality of elongate cavities.

2. Arrangement according to claim 1, wherein the floor panels of the plurality of floor panels are provided as sandwich panels (32).

3. Arrangement according to claim 1 or 2, wherein a first part of the elongate cavities is provided as air supply cavities (82) for the air supply and a second part of the elongate cavities is provided as insulation cavities (84) used for providing thermal insulation to thermally insulate the air supply cavities;
wherein the air supply cavities and the insulation cavities are arranged in an alternating manner; and
wherein the air supply cavities are arranged to be accessible from below.

4. Arrangement according to claim 1, 2 or 3, wherein the sheet-like structure is fixed at least to the bottom layer by mounting points (42) that are provided as connecting interfaces for additional mounting to the floor panel.

5. Arrangement according to one of the preceding claims, wherein the at least one air supply is attached to the plurality of floor panels from below; and
wherein a plurality of air supply passages (50) is provided in the underside of the floor panels for providing a supply connection from the at least one air supply to the plurality of elongate cavities.

6. Arrangement according to claim 4 or 5, when dependent on claim 4, wherein the at least one air supply is mounted to at least a part of the mounting points provided as connecting interfaces.

7. Arrangement according to one of the preceding claims, wherein the at least one air supply is provided as a longitudinal air duct forming an air distribution unit below the floor panels.

8. Arrangement according to one of the preceding claims, wherein the at least one air supply is provided by a flexible sheetlike structure (60) attached to the floor panels; and
wherein the flexible sheetlike structure is provided as a fabric or foil.

9. Arrangement according to claim 8, wherein at least some attachments of the flexible sheetlike structure are provided with a failure capability for a determined threshold of pressure difference occasion under rapid decompression.

10. Arrangement according to one of the preceding claims, wherein the floor panels are provided with air outlet openings (87) in one edge region, the air outlet openings being fluidly connected to at least a part of the elongate cavities.

11. A floor system (100) for an aircraft cabin, the floor system comprising:
- a support structure (102) comprising:
a first and a second row of vertical support members (104) for resting on a fuselage structure of the aircraft, wherein the first and second rows are spaced apart from each other transverse to the longitudinal direction of the aircraft, when the floor system is arranged in the aircraft; and
a support arrangement (106) carried by the vertical support members and forming a plurality of floor supports (108); wherein the floor supports are provided in the longitudinal direction along both sides forming a main center section (110) therebetween; and
- an aircraft cabin floor arrangement according to one of the preceding claims;
wherein the plurality of floor panels are carried by the floor supports spanning the main center section.

12. System according to claim 11, wherein the plurality floor supports also comprises floor supports forming a first (112) and second lateral section (114) on both sides of the main center section;
wherein the floor system comprises secondary floor panels (116) at least partly along the first and second lateral section; and
wherein the secondary floor panels each comprise a plurality of elongate passages (117) aligned in the longitudinal direction of the aircraft, when the floor system is arranged in the aircraft, for receiving electric supply lines for passenger seats.

13. An aircraft (200) comprising:
- a fuselage (202);
- a wing arrangement (204) attached to the fuselage; and
- a propulsion arrangement (206) attached to at least one of the group of fuselage and wing arrangement;
wherein a cabin floor (208) is provided in the fuselage for a cabin area; and
wherein the cabin floor comprises at least one aircraft cabin floor arrangement according to one of the claims 1 to 10 or a floor system for an aircraft cabin according to claim 11 or 12.

14. A method (300) for supplying air to an aircraft cabin, comprising the following steps:
- supplying (302) air with at least one air supply arranged in a longitudinal direction of an aircraft;
- supplying (304) the air to a plurality of elongate cavities provided in a plurality of floor panels, which panels are arranged in a spanning direction transverse to the longitudinal direction of the aircraft, wherein the elongate cavities are aligned with the spanning direction of the floor panels; and
- supplying (306) the air from the elongate cavities to passenger seat areas in the aircraft cabin.

## Patentansprüche

1. Flugzeugkabinenbodenanordnung (10) mit Luftverteilung, umfassend:
- eine Vielzahl von Bodenplatten (12); und
- mindestens eine Luftzufuhr (14);
wobei die mindestens eine Luftzufuhr dazu konfiguriert ist, in einer Längsrichtung (16) eines Flugzeugs angeordnet zu sein;
wobei die Vielzahl von Bodenplatten dazu konfiguriert ist, in einer Spannrichtung (18) quer zu der Längsrichtung des Flugzeugs angeordnet zu sein;
wobei die Vielzahl von Bodenplatten jeweils eine Vielzahl von länglichen Hohlräumen (20) umfasst, die mit der Spannrichtung der Bodenplatten ausgerichtet sind;
wobei die mindestens eine Luftzufuhr mit mindestens einem Teil der länglichen Hohlräume der Bodenplatten fluidisch verbunden ist zum Zuführen von Luft von der mindestens einen Luftzufuhr zu den länglichen Hohlräumen;
wobei die fluidisch verbundenen länglichen Hohlräume dazu konfiguriert sind, die zugeführte Luft Passagiersitzbereichen in einer Flugzeugkabine bereitzustellen;
wobei die Vielzahl von Bodenplatten eine obere Schicht (34) und eine untere Schicht (36) umfasst, die durch eine Mittelschicht (38) voneinander getrennt sind; und wobei die Mittelschicht eine gewellte oder gefaltete blattartige Struktur (40) umfasst, die abwechselnd an der oberen Schicht und der unteren Schicht befestigt ist und die Vielzahl von länglichen Hohlräumen bildet.

2. Anordnung nach Anspruch 1, wobei die Bodenplatten der Vielzahl von Bodenplatten als Sandwichplatten (32) bereitgestellt sind.

3. Anordnung nach Anspruch 1 oder 2, wobei ein erster Teil der länglichen Hohlräume als Luftzufuhrhohlräume (82) für die Luftzufuhr bereitgestellt ist und ein zweiter Teil der länglichen Hohlräume als Isolierhohlräume (84) bereitgestellt ist, die zum Bereitstellen einer thermischen Isolierung verwendet werden, um die Luftzufuhrhohlräume thermisch zu isolieren;
wobei die Luftzufuhrhohlräume und die Isolierhohlräume abwechselnd angeordnet sind; und
wobei die Luftzufuhrhohlräume so angeordnet sind, dass sie von unten zugänglich sind.

4. Anordnung nach Anspruch 1, 2 oder 3, wobei die blattartige Struktur mindestens an der unteren Schicht durch Befestigungspunkte (42) befestigt ist, die als Verbindungsschnittstellen für eine zusätzliche Befestigung an der Bodenplatte bereitgestellt sind.

5. Anordnung nach einem der vorhergehenden Ansprüche, wobei die mindestens eine Luftzufuhr von unten an der Vielzahl von Bodenplatten angebracht ist; und
wobei eine Vielzahl von Luftzufuhrdurchgängen (50) in der Unterseite der Bodenplatten bereitgestellt ist, um eine Versorgungsverbindung von der mindestens einen Luftzufuhr zu der Vielzahl von länglichen Hohlräumen bereitzustellen.

6. Anordnung nach Anspruch 4 oder 5, wobei wenn abhängig von Anspruch 4, die mindestens eine Luftzufuhr an mindestens einem Teil der als Verbindungsschnittstellen vorgesehenen Befestigungspunkte befestigt ist.

7. Anordnung nach einem der vorhergehenden Ansprüche, wobei die mindestens eine Luftzufuhr als ein Längsluftkanal bereitgestellt ist, der eine Luftverteilungseinheit unter den Bodenplatten bildet.

8. Anordnung nach einem der vorhergehenden Ansprüche, wobei die mindestens eine Luftzufuhr durch eine flexible blattartige Struktur (60) bereitgestellt ist, die an den Bodenplatten angebracht ist; und
wobei die flexible blattartige Struktur als Gewebe oder Folie bereitgestellt ist.

9. Anordnung nach Anspruch 8, wobei mindestens einige Befestigungen der flexiblen blattartigen Struktur mit einer Ausfallfähigkeit für einen bestimmten Schwellenwert eines Druckdifferenzereignisses unter schneller Dekompression versehen sind.

10. Anordnung nach einem der vorhergehenden Ansprüche, wobei die Bodenplatten mit Luftauslassöffnungen (87) in einem Randbereich versehen sind, wobei die Luftauslassöffnungen mit mindestens einem Teil der länglichen Hohlräume fluidisch verbunden sind.

11. Bodensystem (100) für eine Flugzeugkabine, wobei das Bodensystem umfasst:
- eine Stützstruktur (102), umfassend:
eine erste und eine zweite Reihe von vertikalen Stützelementen (104) zum Aufliegen auf einer Rumpfstruktur des Flugzeugs; wobei die erste und die zweite Reihe quer zu der Längsrichtung des Flugzeugs voneinander beabstandet sind, wenn das Bodensystem in dem Flugzeug angeordnet ist; und
eine Stützanordnung (106), die von den vertikalen Stützelementen getragen wird und eine Vielzahl von Bodenstützen (108) bildet; wobei die Bodenstützen in der Längsrichtung entlang beider Seiten bereitgestellt sind, die einen Hauptmittelabschnitt (110) dazwischen bilden; und
- eine Flugzeugkabinenbodenanordnung nach einem der vorhergehenden Ansprüche;
wobei die Vielzahl von Bodenplatten von den Bodenstützen getragen wird, die den Hauptmittelabschnitt überspannen.

12. System nach Anspruch 11, wobei die Vielzahl von Bodenstützen auch Bodenstützen umfasst, die einen ersten (112) und einen zweiten seitlichen Abschnitt (114) auf beiden Seiten des Hauptmittelabschnitts bilden;
wobei das Bodensystem sekundäre Bodenplatten (116) zumindest teilweise entlang des ersten und des zweiten seitlichen Abschnitts umfasst; und
wobei die sekundären Bodenplatten jeweils eine Vielzahl von länglichen Durchgängen (117) umfassen, die in der Längsrichtung des Flugzeugs ausgerichtet sind, wenn das Bodensystem in dem Flugzeug angeordnet ist, um elektrische Versorgungsleitungen für Passagiersitze aufzunehmen.

13. Flugzeug (200), umfassend:
- einen Rumpf (202);
- eine Flügelanordnung (204), die an dem Rumpf angebracht ist; und
- eine Antriebsanordnung (206), die an mindestens einer der Gruppe von Rumpf- und Flügelanordnung angebracht ist;
wobei ein Kabinenboden (208) in dem Rumpf für einen Kabinenbereich bereitgestellt ist; und
wobei der Kabinenboden mindestens eine Flugzeugkabinenbodenanordnung nach einem der Ansprüche 1 bis 10 oder ein Bodensystem für eine Flugzeugkabine nach Anspruch 11 oder 12 umfasst.

14. Verfahren (300) zum Zuführen von Luft zu einer Flugzeugkabine, umfassend die folgenden Schritte:
- Zuführen (302) von Luft mit mindestens einer Luftzufuhr, die in einer Längsrichtung eines Flugzeugs angeordnet ist;
- Zuführen (304) der Luft zu einer Vielzahl von länglichen Hohlräumen, die in einer Vielzahl von Bodenplatten bereitgestellt sind, wobei die Platten in einer Spannrichtung quer zu der Längsrichtung des Flugzeugs angeordnet sind, wobei die länglichen Hohlräume mit der Spannrichtung der Bodenplatten ausgerichtet sind; und
- Zuführen (306) der Luft aus den länglichen Hohlräumen zu Passagiersitzbereichen in der Flugzeugkabine.

## Revendications

1. Agencement de plancher de cabine d'aéronef (10) avec distribution d'air, comprenant:
- une pluralité de panneaux de plancher (12); et
- au moins une alimentation en air (14);
dans lequel l'au moins une alimentation en air est configurée pour être agencée dans une direction longitudinale (16) d'un aéronef;
dans lequel la pluralité de panneaux de plancher sont configurés pour être agencés dans une direction d'envergure (18) transversale à la direction longitudinale de l'aéronef;
dans lequel la pluralité de panneaux de plancher comprennent chacun une pluralité de cavités allongées (20) alignées avec la direction d'envergure des panneaux de plancher;
dans lequel l'au moins une alimentation en air est reliée fluidiquement à au moins une partie des cavités allongées des panneaux de plancher pour fournir de l'air de l'au moins une alimentation en air aux cavités allongées;
dans lequel les cavités allongées reliées fluidiquement sont configurées pour fournir l'air fourni aux zones de sièges passagers dans une cabine d'aéronef;
dans lequel la pluralité de panneaux de plancher comprennent une couche supérieure (34) et une couche inférieure (36) espacées par une couche centrale (38); et dans lequel la couche centrale comprend une structure en forme de feuille ondulée ou pliée (40) fixée alternativement à la couche supérieure et à la couche inférieure formant la pluralité de cavités allongées.

2. Agencement selon la revendication 1, dans lequel les panneaux de plancher de la pluralité de panneaux de plancher sont fournis sous forme de panneaux sandwich (32).

3. Agencement selon la revendication 1 ou 2, dans lequel une première partie des cavités allongées est fournie sous forme de cavités d'alimentation en air (82) pour l'alimentation en air et une seconde partie des cavités allongées est fournie sous forme de cavités d'isolation (84) utilisées pour fournir une isolation thermique afin d'isoler thermiquement les cavités d'alimentation en air;
dans lequel les cavités d'alimentation en air et les cavités d'isolation sont agencées de manière alternée; et
dans lequel les cavités d'alimentation en air sont agencées pour être accessibles par le bas.

4. Agencement selon la revendication 1, 2 ou 3, dans lequel la structure en forme de feuille est fixée au moins à la couche inférieure par des points de montage (42) qui sont fournis sous forme d'interfaces de connexion pour un montage supplémentaire sur le panneau de plancher.

5. Agencement selon l'une des revendications précédentes, dans lequel l'au moins une alimentation en air est fixée à la pluralité de panneaux de plancher par le bas; et
dans lequel une pluralité de passages d'alimentation en air (50) est prévue dans la face inférieure des panneaux de plancher pour fournir une connexion d'alimentation de l'au moins une alimentation en air à la pluralité de cavités allongées.

6. Agencement selon la revendication 4 ou 5, lorsqu'elle dépend de la revendication 4, dans lequel l'au moins une alimentation en air est montée sur au moins une partie des points de montage fournis sous forme d'interfaces de connexion.

7. Agencement selon l'une des revendications précédentes, dans lequel l'au moins une alimentation en air est fournie sous forme de conduit d'air longitudinal formant une unité de distribution d'air sous les panneaux de plancher.

8. Agencement selon l'une des revendications précédentes, dans lequel l'au moins une alimentation en air est fournie par une structure en forme de feuille flexible (60) fixée aux panneaux de plancher; et
dans lequel la structure en forme de feuille flexible est fournie sous forme de tissu ou de feuille.

9. Agencement selon la revendication 8, dans lequel au moins certaines fixations de la structure en forme de feuille flexible sont pourvues d'une capacité de défaillance pour un seuil déterminé d'occasion de différence de pression sous décompression rapide.

10. Agencement selon l'une des revendications précédentes, dans lequel les panneaux de plancher sont pourvus d'ouvertures de sortie d'air (87) dans une région de bord, les ouvertures de sortie d'air étant reliées fluidiquement à au moins une partie des cavités allongées.

11. Système de plancher (100) pour une cabine d'aéronef, le système de plancher comprenant:
- une structure de support (102) comprenant:
une première et une deuxième rangée d'éléments de support verticaux (104) destinés à reposer sur une structure de fuselage de l'aéronef; dans lequel les première et deuxième rangées sont espacées l'une de l'autre transversalement à la direction longitudinale de l'aéronef, lorsque le système de plancher est agencé dans l'aéronef; et
un agencement de support (106) porté par les éléments de support verticaux et formant une pluralité de supports de plancher (108); dans lequel les supports de plancher sont fournis dans la direction longitudinale le long des deux côtés formant une section centrale principale (110) entre eux; et
- un agencement de plancher de cabine d'aéronef selon l'une des revendications précédentes;
dans lequel la pluralité de panneaux de plancher sont portés par les supports de plancher s'étendant sur la section centrale principale.

12. Système selon la revendication 11, dans lequel la pluralité de supports de plancher comprend également des supports de plancher formant une première (112) et une deuxième section latérale (114) des deux côtés de la section centrale principale;
dans lequel le système de plancher comprend des panneaux de plancher secondaires (116) au moins partiellement le long de la première et de la deuxième section latérale; et
dans lequel les panneaux de plancher secondaires comprennent chacun une pluralité de passages allongés (117) alignés dans la direction longitudinale de l'aéronef, lorsque le système de plancher est agencé dans l'aéronef, pour recevoir des lignes d'alimentation électrique pour les sièges passagers.

13. Aéronef (200) comprenant:
- un fuselage (202);
- un agencement d'aile (204) fixé au fuselage; et
- un agencement de propulsion (206) fixé à au moins l'un du groupe de fuselage et d'agencement d'aile;
dans lequel un plancher de cabine (208) est prévu dans le fuselage pour une zone de cabine; et
dans lequel le plancher de cabine comprend au moins un agencement de plancher de cabine d'aéronef selon l'une des revendications 1 à 10 ou un système de plancher pour une cabine d'aéronef selon la revendication 11 ou 12.

14. Procédé (300) pour fournir de l'air à une cabine d'aéronef, comprenant les étapes suivantes:
- fournir (302) de l'air avec au moins une alimentation en air agencée dans une direction longitudinale d'un aéronef;
- fournir (304) l'air à une pluralité de cavités allongées prévues dans une pluralité de panneaux de plancher, lesquels panneaux sont agencés dans une direction d'envergure transversale à la direction longitudinale de l'aéronef, dans lequel les cavités allongées sont alignées avec la direction d'envergure des panneaux de plancher; et
- fournir (306) l'air des cavités allongées aux zones de sièges passagers dans la cabine d'aéronef.
